# FASCICULE DE BREVET EUROPEEN

(11) **EP 1 594 708 B1**
(45) Date de publication et mention de la délivrance du brevet: **29.10.2008**
(21) Numéro de dépôt: 04712075.3
(22) Date de dépôt: 18.02.2004
(51) Int. Cl.: B60J 1/00

(54) **PROCEDE DE MONTAGE D'UN TOIT ESCAMOTABLE ET D'UN VEHICULE EQUIPE D'UN TEL TOIT**
VERFAHREN ZUR MONTAGE EINES FALTBAREN DACHES UND PKW MIT SOLCH EINEM DACH
METHOD FOR MOUNTING A RETRACTABLE ROOF AND VEHICLE FITTED WITH SAID ROOF

(30) Priorité: 21.02.2003 FR 0302149
(43) Date de publication de la demande: 16.11.2005
(73) Titulaire: RENAULT S.A.S., 92100 Boulogne Billancourt (FR)
(72) Inventeur: BAUMEIER, Andréas, D-49143 Bissendorf (DE); HIENBEGA, Jörg, D-49086 Osnabrück (DE)
(86) Numéro de dépôt international: PCT/FR2004/000379
(87) Numéro de publication internationale: WO 2004/076215

(56) Documents cités:
- EP-A- 1 199 202
- DE-A- 19 520 648
- DE-A- 19 639 504
- DE-A- 19 949 960
- US-A1- 2002 014 782

## Description

La présente invention concerne les dispositifs de toit escamotable et les véhicules équipés de tels dispositifs. Elle concerne plus particulièrement le procédé de montage des dispositifs de toit escamotable apte à être rangé dans une partie du coffre d'un véhicule.

De telles structures et mécanismes associés sont décrits et représentés dans les documents DE4445580, DE4445944 et EP-1199202. Il est décrit dans le premier document un toit rigide escamotable dans une partie du coffre, ce toit étant articulé par un système d'articulation en quadrilatère. Il est décrit dans le deuxième document une porte de coffre dont le mécanisme permet une ouverture vers l'avant pour le rangement des bagages et une ouverture vers l'arrière pour permettre le passage d'un toit rigide.

Les structures présentées dans ces documents présentent plusieurs inconvénients, et par exemple le nombre de pièces nécessaires qui ajoute un poids et un coût contraignants et qui ne permet pas une répétitivité de montage fiable. Le grand nombre de pièces utilisées dans les différentes tringleries présente également un inconvénient par rapport à la stabilité du système. De plus, ces documents ne tiennent ni compte des problèmes posés par la gestion de la tablette arrière lors des mouvement de la structure de toit, ni des problèmes d'interaction entre la caisse du véhicule et les bras des mécanismes passant à travers cette caisse.

Il est un objet de la présente invention de proposer une amélioration du procédé de montage des dispositifs de toit escamotables.
L'invention concerne également un véhicule monté selon le procédé de l'invention.

La présente invention va maintenant être décrite, seulement à titre d'exemple et en référence aux figures jointes, parmi lesquelles :
la figure 1 représente une vue de côté d'un dispositif de toit escamotable selon l'invention ainsi qu'un mécanisme latéral et des systèmes pneumatiques associés;
la figure 2 représente une vue de côté partiel d'un dispositif de toit escamotable selon la figure 1.

En référence à ces figures, un véhicule comprend un dispositif de toit 110 escamotable. Afin de clarifier la description qui va suivre, on va définir les deux positions extrêmes du toit 110.

Lorsque le panneau de toit 110 se retrouve en appui sur le cadre du véhicule, et en particulier sur le montant supérieur du pare-brise, c'est-à-dire lorsque le toit 110 réalise une fonction de couverture de l'habitacle formé par le poste de conduite et l'ensemble des sièges des passagers, le toit 110 est dit en position fermée.

Lorsque l'ensemble du toit 110 se retrouve logé dans l'espace de rangement qui lui est consacré à l'arrière du véhicule, de telle sorte que l'habitacle formé par le poste de conduite et l'ensemble des sièges passagers est alors découvert, le toit 110 est dit en position escamotée.

Dans une configuration avec le toit 110 en position fermée, une structure de couverture arrière est située derrière les arceaux de sécurité. Avantageusement, elle comprend une tablette arrière sensiblement horizontale. De part et d'autre de la tablette, transversalement au véhicule, des bras sont déployés pour supporter le toit 110. En position décapotée, la tablette arrière est située de la même façon derrière les arceaux de sécurité, sensiblement horizontale. De part et d'autre de la tablette, transversalement au véhicule, afin de masquer l'espace laissé libre par les bras solidaires du toit 110 qui sont désormais dans l'espace de rangement consacré au toit 110 à l'arrière du véhicule, des « flaps », dit volets de fermeture, sont déplacés d'une position rangée à une position dite déployée permettant de masquer l'espace libre. La présence de tels volets est nécessaire d'un point de vue esthétique afin que le véhicule en position décapotée présente une surface pleine, d'un point de vue aérodynamique pour éviter des perturbations dans l'écoulement de l'air, et également d'un point de vue de l'étanchéité du mécanisme présent sous la tablette.

Afin de permettre l'escamotage du toit 110 dans l'espace de rangement à l'arrière du véhicule, la tablette arrière change de position et passe successivement d'une position initiale, dite position de repos et de préférence sensiblement horizontale, à une position dite ouverte et de préférence sensiblement verticale afin d'offrir de la place pour le passage du toit 110, avant de revenir finalement dans une position sensiblement horizontale.

De façon avantageuse lorsque le toit 110 est en position fermée ou en position escamotée, la tablette arrière présente un angle avec le plan horizontal, de telle sorte que la partie arrière de la tablette est plus basse que la partie avant de la tablette.

Le mouvement de la tablette arrière lors d'un escamotage du toit 110 peut se dérouler de la façon suivante:
En position fermée, la tablette, sensiblement horizontale, est pincée dans sa partie arrière par la partie arrière du toit 110. Lorsque l'ouverture du toit 110 est commandée par le conducteur, une unité de contrôle pilote un premier mouvement de la porte de coffre 112 pour libérer l'espace de rangement consacré au toit 110 dans la partie arrière du véhicule. Pendant que la porte de coffre 112 continue à pivoter vers l'arrière du véhicule, selon un axe transversal du véhicule, le toit 110 est mis en mouvement par une action hydraulique d'un vérin de commande. Par un système de cames, le mouvement de rotation du toit 110 engendre un mouvement de rotation de la tablette. Afin de permettre la libération de la tablette arrière du pinçage réalisé par le toit 110, la tablette arrière réalise un premier mouvement de rotation vers le bas du véhicule, selon un axe transversal du véhicule. Lorsque la partie arrière du toit 110, qui réalisait précédemment le pinçage de la tablette, est située à un niveau vertical inférieur à celui de la tablette, la tablette réalise un deuxième mouvement de rotation, cette fois vers le haut du véhicule, selon le même axe transversal. Ce deuxième mouvement de rotation s'opère jusqu'à ce que la tablette se retrouve en butée en position sensiblement verticale. Pendant que la tablette est dans cette position de butée, le toit 110 continue son escamotage dans l'espace de rangement qui lui est consacré et entraîne désormais la rotation des volets de fermeture.

Le rabattement de la tablette est ensuite commandé par le rabattement de la porte de coffre 112. Un câble mécanique, par exemple du type des câbles de frein de vélo connus sous le nom de câble Bowden, transmet un effort engendré par le mécanisme de fermeture de la porte de coffre 112 à un dispositif relié à la tablette. Lorsque le rabattement de la porte de coffre 112 est ordonné par l'unité de contrôle, c'est-à-dire alors que le toit 110 n'est pas encore intégralement escamoté, un mouvement simultané de la tablette arrière est généré par la liaison par câble, de manière à faire revenir la tablette arrière, maintenant greffée des deux volets de fermeture, dans une position sensiblement horizontale.

Le mouvement de la tablette arrière pour permettre le passage du toit 110 d'une position escamoté à une position fermée est symétriquement le même. La tablette est dans un premier temps amenée en butée dans une position sensiblement verticale, puis ramenée dans une position sensiblement horizontale. Ces mouvements sont crées par la rotation du toit 110 retrouvant une position fermée et par l'action du câble Bowden transmettant à la tablette les mouvements de la porte de coffre 112.

Comme vu précédemment, lorsque le toit 110 est en position escamotée, il est nécessaire d'avoir des volets de fermeture de part et d'autre de la tablette arrière pour des besoins esthétiques, aérodynamiques et d'étanchéité. Lorsque le toit 110 est en position fermée, ces mêmes volets de fermeture ne peuvent être dans cette position, car ils gêneraient le passage des bras associés au toit 110. En position fermée, ces volets sont donc glissés sous la tablette arrière. Le principe du mouvement des volets est le suivant:

Les volets restent glissés sous la tablette lorsque le toit 110 est en position fermé, et lorsque ce toit 110 commence à être animé d'un mouvement de rotation. Ils restent glissés dans cette position jusqu'à ce que la tablette soit en butée en position sensiblement verticale. Dans cette position, la rotation du toit 110 selon un axe transversal du véhicule entraîne par cames le déplacement des volets. Afin de passer d'une position glissée sous la tablette à une position à coté de la tablette en formant un plan avec cette tablette, le mouvement des volets doit être à la fois un mouvement de dégagement de sous la tablette et un mouvement de translation pour arriver à la même hauteur que la tablette. Avantageusement, ces deux mouvements sont réalisées simultanément par une rotation hélicoïdale. Il sera compris que ces deux mouvements peuvent être réalisés successivement par un mouvement de rotation puis de translation, ou par deux mouvements de translation.

Les mouvements respectifs des volets de fermeture et de la tablette sont donc engendrés par un mécanisme commun de rotation basé sur le mouvement de rotation initial du toit 110.

Un mouvement continu de rotation du toit 110 entraîne deux mouvements successifs, le mouvement de la tablette dans un premier temps puis le mouvement des volets de fermeture. De façon symétrique selon l'axe médian du véhicule, le mécanisme décrit par la suite pour un côté gauche du véhicule est le même pour le coté droit.

Le mouvement continu de rotation du toit 110 est engendré par une commande hydraulique. Un vérin, composé d'un corps et d'un piston, est articulé sur la caisse 100, à l'extrémité du corps du vérin par laquelle le piston débouche. Une telle articulation autorise un mouvement du corps du vérin sans être trop pénalisant pour la poussée longitudinale du piston. Ce mouvement du piston génère le mouvement de deux bielles reliées respectivement à l'extrémité libre du piston. Une première bielle est solidaire de la caisse 100, assurant à la fois un guidage du mouvement du piston et une tenue de celui-ci lorsqu'il est en extension, et une deuxième bielle, dite bielle de démultiplication, montée en rotation libre sur le bras intérieur du toit 110, le bras supportant le toit 110 situé vers l'habitacle, permet de transférer le mouvement de translation du piston en un mouvement rotatif de ce bras intérieur. La bielle de démultiplication tire le bras intérieur vers le vérin lorsque le piston se rétracte et inversement pousse le bras intérieur lorsque le piston s'expanse hors du corps du vérin. La partie inférieure du bras intérieur étant montée à rotation autour d'un axe fixe, dit axe de rotation principal, le déplacement du bras intérieur est donc un mouvement de rotation autour de cet axe. L'ensemble des différents points de pivot formé entre autres par cet axe de rotation, les points de pivot entre la structure du toit 110 et les parties supérieures des bras intérieur et extérieur, et un point de pivot entre la partie inférieure du bras extérieur et la caisse 100, forme un quadrilatère articulé dont le mouvement est généré par la rotation du bras intérieur autour de l'axe de rotation principal. La mobilité du toit 110, supporté par le quadrilatère articulé, est donc engendré par le mouvement sensiblement longitudinal du piston et s'effectue via une rotation de l'axe principal.

Cet axe de rotation principal porte également au moins une première poulie présentant une saillie perpendiculaire à l'axe de rotation et une gorge sur le pourtour de la première poulie. L'axe de rotation principal porte également au moins une came présentant une protubérance radiale. Le bras intérieur s'étend à son extrémité vers l'intérieur du véhicule, cette extension étant parallèle à l'axe de rotation principal. La position relative des différents éléments portés par l'axe de rotation principal est telle que le bras intérieur est situé vers l'extérieur du véhicule, la came est située vers l'intérieur du véhicule et la première poulie est située entre le bras et la came. L'extension du bras intérieur parallèle à l'axe de rotation principal coupe donc le plan de rotation de la première poulie et la saillie radiale de la première poulie présente une dimension telle qu'elle peut être en contact avec l'extension du bras intérieur parallèle à l'axe de rotation principal.

Un levier sensiblement « en L » est articulé à une de ses extrémités sur la came et présente un orifice permettant le passage de la protubérance radiale de la came dans une position extrême. L'autre extrémité du levier est montée à rotation autour d'un axe solidaire de la tablette.

Une seconde poulie est montée à rotation autour d'un second axe de rotation porté par un carter, qui porte également l'axe de rotation principal. Cette seconde poulie présente une gorge dans laquelle un câble mécanique, du type câble de frein de vélo, est inséré. Ce câble est relié au mécanisme d'ouverture de la porte de coffre 112.

La came est reliée à une extrémité d'un ressort de rappel dont l'autre extrémité est solidarisée au carter. Ce ressort de rappel tend à ramener la tablette, via la came et le « levier en L », dans une position sensiblement horizontale, lorsque la deuxième poulie, qui bloque la protubérance radiale de la came, est actionné par le câble de la porte de coffre 112. La came est alors libérée et revient au contact de l'extension du bras intérieur par la fonction de rappel du ressort.

L'extension du bras intérieur présente une première et une deuxième surface apte à coopérer simultanément avec une troisième surface de la saillie de la première poulie et avec une quatrième surface de la came. Ces troisièmes et quatrièmes surfaces sont agencées de manière à, dans une position de repos lorsque la tablette est baissée et le toit 110 fermé, ne pas se trouver dans un plan parallèle au plan défini par les première et deuxième surfaces de l'extension du bras intérieur. La came est ainsi décalée en position de repos par rapport à la première poulie de sorte que lors de l'escamotage du toit 110, et donc de la rotation du bras intérieur, la seconde surface de l'extension du bras intérieur vienne tout d'abord en contact avec la quatrième surface de la came et engendre tout d'abord la rotation de la came autour de l'axe de rotation principal. La rotation de cette came entraîne d'une part le déplacement du « levier en L » et donc de la tablette dans une position verticale, et d'autre part le déplacement de la protubérance radiale de la came qui s'engage alors dans une rainure de la deuxième poulie.

Pendant que l'escamotage du toit 110 se poursuit, c'est à dire que la rotation du bras intérieur autour de l'axe de rotation principal continue, la première surface de l'extension du bras intérieur vient maintenant en contact de la troisième surface de la première poulie et engendre une rotation de la première poulie autour de l'axe de rotation principal. Un câble de type frein de vélo est fixé dans la gorge de cette première poulie et la rotation de cette première poulie génère un effort de traction sur ce câble, effort de traction qui se répercute à l'autre extrémité du câble sur un mécanisme de pilotage des volets de fermeture. Ce mécanisme de pilotage des volets de fermeture est fixé sur la tablette et consiste en un axe solidaire de la tablette et un cylindre portant le volet de fermeture. Le mouvement du cylindre par rapport à l'axe est un mouvement de rotation hélicoïdale qui permet le dégagement du volet de sous la tablette et permet en même temps de rétablir le volet à un niveau vertical sensiblement équivalent. Le mouvement de rotation hélicoïdale des volets de fermeture est donc est initié par la rotation de la première poulie portée par l'axe de rotation principal.

Il sera compris que le mouvement des volets de fermeture débute pendant l'escamotage du toit 110, alors que la tablette est sensiblement en position verticale. Ce mouvement des volets se termine alors que le toit 110 est déjà escamoté et que la porte de coffre 112 reprend sa position, initiale. L'ensemble formé par la première poulie, le support intermédiaire et la came étant en butée contre l'extension du bras intérieur, le retour en position de la tablette arrière est initié par la mise en mouvement de la porte de coffre 112. Un câble relie le mécanisme de cette porte de coffre 112 à la seconde poulie et permet le dégagement de la protubérance radiale de la came, en créant un mouvement rotatif de la seconde poulie. Le mouvement désormais autorisé de la came et donc du « levier en L » permet un retour de la tablette dans une position sensiblement horizontale. Cette position sensiblement horizontale est atteinte en butée par le contact de la tablette sur un pion solidaire du carter.

Lorsque le conducteur commande une fermeture du toit 110, l'opération se déroule symétriquement de la même façon. L'ouverture de la porte de coffre 112 et la mise en mouvement de l'ensemble articulé supportant le toit 110 engendrent la mise en position de la tablette arrière dans une position sensiblement verticale et engendre le dégagement des butées réalisées par les premières et deuxièmes surfaces de l'extension du bras intérieur sur les troisième surface de la première poulie et quatrième surface de la came. Un système de ressort placé entre l'axe et le cylindre utilisés pour la rotation hélicoïdale des volets de fermeture permet alors, lorsque la pression exercée par le câble sur le cylindre n'existe plus, c'est à dire lorsque la première poulie s'est dégagée suite à la rotation de l'axe principal, de faire revenir les volets en position sous la tablette pour permettre le passage des bras supportant la structure de toit 110.

La position fermée du toit 110, dans laquelle l'ensemble articulé supportant le toit 110 présente une partie inférieure sous la structure de caisse 100 et une partie supérieure liée au toit 110 et donc au dessus de cette structure de caisse 100, et la position escamotée de ce toit 110, dans laquelle l'ensemble articulé est entièrement situé sous la structure de caisse 100, implique la création d'un orifice dans la structure de caisse 100 pour permettre le passage de l'ensemble articulé. Ces orifices ne peuvent être découverts lorsque le toit 110 est en position escamotée pour des raisons d'esthétique, d'aérodynamique ou d'étanchéité. Avantageusement, le bras intérieur supportant le toit 110 présente une forme coudée près de son extrémité inférieure. Cette forme coudée est complémentaire d'une came, propre à une trappe, non représenté et située dans la structure du véhicule, dans une zone sensiblement proche de la tablette. Lorsque le toit 110 est animé afin de retrouver une position fermée, la partie inférieure du bras intérieur rentre en contact avec la came de la trappe et engendre une rotation de cette came et d'une plaque associée et donc une ouverture de la trappe. Le bras intérieur et le bras extérieur peuvent alors passer à travers cette trappe pour supporter le toit 110. Un ressort de rappel est lié à la came de la trappe de sorte que, lors de l'escamotage du toit 110, et donc lorsque la partie inférieure du bras intérieur ne se trouve plus en contact avec la came, cette came reprenne sa position de repos et génère l'obturation de la trappe par un retour de la plaque associée à la came dans sa position de repos.

La présente invention concerne également un mécanisme de la porte de coffre 112. Un véhicule dont le toit 110 rigide peut être escamoté dans un espace de rangement consacré à l'arrière du véhicule doit présenter une porte de coffre 112 à la cinématique particulière.

Dans un premier temps, la porte de coffre 112 doit permettre une ouverture standard, afin de ranger des bagages dans le coffre. Pour cela, la porte de coffre 112 est montée à rotation autour d'un axe transversal dans la partie de la porte de coffre 112 située le plus en avant du véhicule, lorsque cette porte de coffre 112 est en position fermée : l'accès au coffre se fait alors, lorsque la porte de coffre 112 est ouverte, par l'arrière du véhicule.

Dans un deuxième temps, lorsque le conducteur demande un escamotage du toit 110, le toit 110 vient se ranger dans un espace de rangement qui lui est consacré dans la zone du coffre. La porte de coffre 112 doit donc s'ouvrir pour laisser le passage au toit 110 et une ouverture standard ne le permet pas. La porte de coffre 112 doit alors pivoter autour d'un second axe de rotation transversal, dans la partie de la porte de coffre 112 située le plus en arrière du véhicule, lorsque cette porte de coffre 112 est en position fermée : l'accès au coffre se fait alors, lorsque la porte de coffre 112 est ouverte, par l'avant du véhicule et permet donc le passage du toit 110 et de son mécanisme associé.

La porte de coffre 112 est mis en mouvement par un ensemble de trois éléments principaux, à savoir un dispositif de serrure comprenant une charnière 118 dite en «col de cygne» et deux mécanismes latéraux symétriquement disposés de chaque coté de la porte de coffre 112. Seul le mécanisme latéral 115 du côté gauche du véhicule sera décrit, le mécanisme latéral 115 correspondant du côté droit se retrouvant par symétrie.

Ce mécanisme latéral 115 est composé d'une platine 122 solidarisée à la caisse 100, d'un châssis intermédiaire 116 articulé sur cette platine 122, d'un premier système pneumatique dont une extrémité est fixée sur la platine 122 et dont l'autre extrémité est reliée au châssis intermédiaire 116, et d'un système d'articulation situé entre le châssis intermédiaire 116 et la porte de coffre 112 et formé de bielles et d'un second système pneumatique. La platine 122 permet de regrouper, sur la même pièce, différentes fonctionnalités comme une articulation du châssis intermédiaire 116, des moyens d'immobilisation offrant la possibilité de verrouiller ce châssis en position prêt à monter, la fixation du premier système pneumatique pilotant le mouvement du châssis intermédiaire 116. Cette platine 122 est constituée d'un matériau peu lourd, est de faible épaisseur et peut présenter avantageusement une forme triangulaire.

Le châssis intermédiaire 116 est lui constitué d'une seule pièce, sensiblement en forme de « double L ». Une première partie, dite partie d'articulation, est montée sur la platine 122 par une liaison pivot selon un axe sensiblement transversal au véhicule et perpendiculaire au plan de la platine 122. Cette première partie d'articulation porte également l'extrémité libre du premier système pneumatique, le mouvement de translation du piston générant, de par cette liaison en rotation libre et le point d'articulation du châssis sur la platine 122, un mouvement de rotation du châssis intermédiaire 116 autour d'un axe transversal au véhicule et perpendiculaire au plan de la platine 122. Le châssis intermédiaire 116 présente une première portion coudée qui relie la première partie d'articulation à une deuxième partie, dite de transfert. Cette deuxième partie de transfert et la première partie d'articulation présente un angle sensiblement droit. A l'autre extrémité de la deuxième partie de transfert, une deuxième portion coudée est prolongée par une troisième partie, dite de support, sensiblement parallèle à la première partie d'articulation. Cette troisième partie de support présente différents points d'articulation sur lesquels sont fixés les différentes bielles du système d'articulation, système situé entre la troisième partie de support du châssis intermédiaire 116 et une plaque de support 128 solidaire de la porte de coffre 112. L'extrémité libre du piston du second système pneumatique est également fixée sur la troisième partie de support du châssis, le corps du vérin du second système pneumatique étant relié à la plaque de support 128 solidaire de la porte de coffre 112.

Lors d'une ouverture classique de la porte de coffre 112 pour un rangement de bagages, le piston du second système pneumatique, compressé lorsque la porte de coffre 112 est fermée, se détend dès que la serrure de la porte de coffre 112 est déverrouillée. L'envergure de ce piston engendre alors une ouverture de la porte de coffre 112, accompagné par les bielles du système d'articulation relié à la troisième partie de support du châssis intermédiaire 116. Dans une telle ouverture, le châssis intermédiaire 116 ne bouge pas et reste fixe par rapport à la platine 122 par l'action des moyens d'immobilisation montés sur cette platine 122. Un pion monté sur le châssis, par exemple au niveau de la deuxième partie courbée, peut présenter à cet effet une forme complémentaire d'un système de crochets des moyens d'immobilisation. Dans cette position, dite de repos, l'agencement de l'ensemble formé par la platine 122 et le châssis est tel qu'avantageusement la première partie d'articulation et la troisième partie de support du châssis intermédiaire 116 sont sensiblement orientées horizontalement et la deuxième partie de transfert est sensiblement orientée verticalement. Afin d'assurer le crochetage du châssis dans la serrure pour revenir à une position de repos, une poulie peut être fixée sur le châssis intermédiaire 116 et servir de guidage par sa complémentarité avec une gorge réalisée sur la platine 122. Avantageusement, cet ensemble poulie/gorge est réalisé à des extrémités de la platine 122 et du châssis éloignée de leur point d'articulation commun.

Un crochetage sûr du châssis par rapport à la platine 122 est nécessaire pour que l'ouverture de la porte de coffre 112 pour le rangement des bagages se fasse via une articulation reposant sur une structure sensiblement horizontale et rigide. Il est également intéressant pour le constructeur lors du montage du véhicule, car l'ensemble formé par la platine 122 et le châssis crocheté dans la serrure peut être ainsi fourni prêt à monter sans présenter de dispersion entre chaque montage sur véhicule. La répétitivité que présente un tel système offre alors un gain de temps et une qualité de montage intéressante pour les constructeurs.

Lors de l'ouverture du coffre par rotation de la porte de coffre 112 autour du second axe de rotation transversal dans la partie de la porte de coffre 112 située le plus en arrière du véhicule, c'est-à-dire lors de l'ouverture de la porte de coffre 112 pour permettre l'escamotage du toit 110, le châssis intermédiaire 116 est décrocheté de la serrure de la platine 122. Le premier système pneumatique 120 est fixé sur la platine 122, avantageusement dans la partie inférieure de cette platine 122, l'extrémité libre du piston étant, comme décrit plus haut, reliée au châssis intermédiaire 116. Le piston du premier système pneumatique 120, compressé lorsque le châssis intermédiaire 116 est dans une position de repos, se détend dès que la serrure de la platine 122 ne retient plus le pion du châssis intermédiaire 116. L'envergure de ce piston, puis son pilotage par pression hydraulique, engendre alors une rotation du châssis intermédiaire 116 selon un axe de rotation perpendiculaire à la platine 122 et donc sensiblement parallèle au second axe de rotation transversal. Dans cette configuration, le pilotage du second système pneumatique, situé entre la troisième partie de support du châssis et la plaque de support 128 solidaire de la porte de coffre 112, est tel que le second système pneumatique reste compressé. Les bielles du système d'articulation situé entre la troisième partie de support du châssis intermédiaire 116 et la plaque de support 128 solidaire de la porte de coffre 112 restent dans ce cas au repos et ne s'articulent pas. Le système transmet le mouvement de rotation du châssis intermédiaire 116 à la porte de coffre 112, qui connaît un mouvement de rotation autour d'un axe transversal propre à la porte de coffre 112 et différent du châssis intermédiaire 116.

Ce mouvement de rotation est réalisé autour d'un axe transversal qui passe avantageusement par la serrure de la porte de coffre 112. Cette serrure présente donc une structure particulière afin de prendre en compte l'ouverture du coffre selon ce second axe de rotation transversal passant par la serrure et ne pas générer d'effort dans la serrure, ce qui serait le cas avec une serrure classique et une porte de coffre 112 qui bouge tout en restant accrochée. Cette serrure repose sur une structure formée avantageusement de deux parties, un bâti fixe solidaire de la structure de caisse 100 du véhicule et une charnière 118 dite « en col de cygne » qui se déplace dans une glissière du bâti. La forme courbée de la glissière et la forme de la charnière 118 correspondante génère un mouvement de cette charnière 118 équivalent à un mouvement de rotation autour d'un axe transversal assimilable au second axe de rotation transversal autour duquel la porte de coffre 112 est en rotation. La partie supérieure de la charnière 118 en «col de cygne» porte la gâche et le pêne de la serrure qui va correspondre à une zone aménagée dans la partie inférieure 124 de la porte de coffre 112. Grâce à la liaison courbe entre le bâti et la charnière 118, les deux éléments de la serrure portés à la fois par la caisse 100 et la porte de coffre 112 peuvent s'incliner de façon coordonnée. Le mouvement de la charnière 118 «en col de cygne» correspond au mouvement de la porte de coffre 112 dans des proportions inférieures. Cette combinaison des mouvements autorise un mouvement de rotation de la porte de coffre 112 sans générer d'effort sur la serrure au contact de cette porte de coffre 112.

L'ouverture de la porte de coffre 112 pour l'escamotage du toit 110 repose donc, entre autres, sur deux systèmes latéraux et un système de serrure, comportant une charnière 118 «col de cygne», indépendants. Dans chacun des systèmes latéraux, le châssis intermédiaire 116 est formé d'une seule pièce, ce qui octroie un gain de pièce, et donc de poids et d'argent, et une meilleure stabilité de chaque système latéral. La synchronisation des mouvements des deux systèmes latéraux est réalisée par l'envoi de commande équivalente en pression dans les premiers systèmes pneumatiques. Une telle synchronisation permet ainsi de s'affranchir d'un appendice mécanique reliant les deux systèmes latéraux. Il est à noter que, de façon avantageuse, la porte de coffre 112 peut présenter une flexibilité prédéterminée pour s'adapter aux mouvements des systèmes latéraux indépendants.

Le montage des mécanismes du toit 110 et de la porte de coffre 112 sur le véhicule peut être réalisé de la façon suivante. Le soubassement d'un véhicule, à savoir la totalité des structures de caisse 100 du véhicule, hors ouvrants et toit 110, arrive sur une chaîne de montage. Un premier ensemble formé entre autres par la platine 122 et le châssis intermédiaire 116, clipsé sur la platine 122, est monté sur les flancs latéraux à l'intérieur de la zone de coffre. Cet ensemble comporte également le second système pneumatique et le système d'articulation formé de bielles, ainsi que la plaque de support 128 destinée à être solidarisée à la porte de coffre 112. L'ensemble est livré à la chaîne de montage avec la platine 122 et le châssis clipsés, avec le système d'articulation replié et le second système pneumatique relié au niveau de son corps de vérin à la plaque de support 128 et clipsé au niveau de l'extrémité de son piston également sur la plaque de support 128. Cette extrémité du piston est destinée, à la fin du montage, à être fixée sur la troisième partie de support du châssis intermédiaire 116. Elle est dans un premier temps clipsée sur la plaque de support 128 pour faciliter la manipulation par l'opérateur, et est ensuite déclipsée et mise en position sur le châssis dès que les ouvrants latéraux sont installés. Il est à noter que le fait que l'ensemble platine 122/châssis arrive sur la chaîne de montage clipsé permet de fixer l'ensemble sans dispersion entre chaque montage. La plaque de support 128 est ensuite solidarisée à la porte de coffre 112 lorsque celle-ci arrive sur la chaîne de montage. Le mécanisme de la porte de coffre 112 est alors quasiment installé. Seul manque le premier système pneumatique, qui doit être monté entre la première partie d'articulation du châssis et la platine 122. Ce premier système pneumatique est livré sur la chaîne de montage avec le toit 110. Le toit 110 est en effet livré sur la chaîne de montage avec au moins le boîtier de distribution hydraulique, les premier système pneumatique gauche et droit, la tablette, les volets de fermeture et le mécanisme associé à cette tablette et ces volets. Le fait qu'un ensemble hydraulique soit ainsi livré d'un bloc permet à l'opérateur de réaliser un montage facilité des câbles hydrauliques. Une fois le toit 110 en place, l'opérateur n'a plus qu'à fixer le boîtier de distribution hydraulique dans le coffre et à le connecter à une unité de contrôle pour que les commandes de pression hydraulique nécessaires à la mise en mouvement des mécanismes du toit 110 et du coffre puissent être transmis depuis l'unité de contrôle vers les systèmes pneumatiques. L'opérateur doit également fixer le premier système pneumatique entre le châssis et la platine 122, en fixant le corps du vérin sur la platine 122, avantageusement dans la partie inférieur de cette platine 122, et en montant à rotation l'extrémité libre du piston sur la première partie d'articulation du châssis. L'opérateur doit également connecter, par un câble de type frein de vélo, le mécanisme de porte de coffre 112 et le mécanisme de la tablette livré avec le toit 110. Un pilotage synchronisé des ouvertures du toit 110 et de la porte de coffre 112 est assuré entre autres par cette connexion.

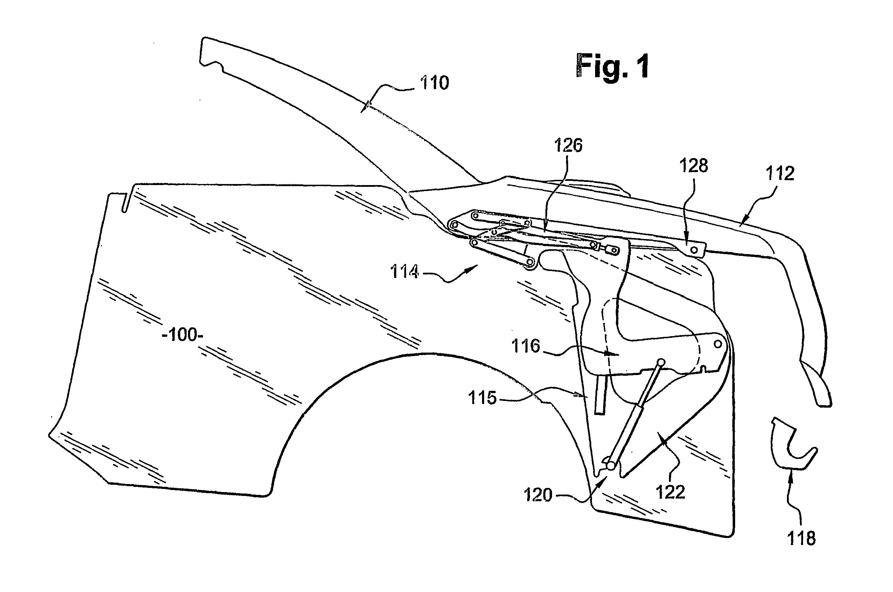

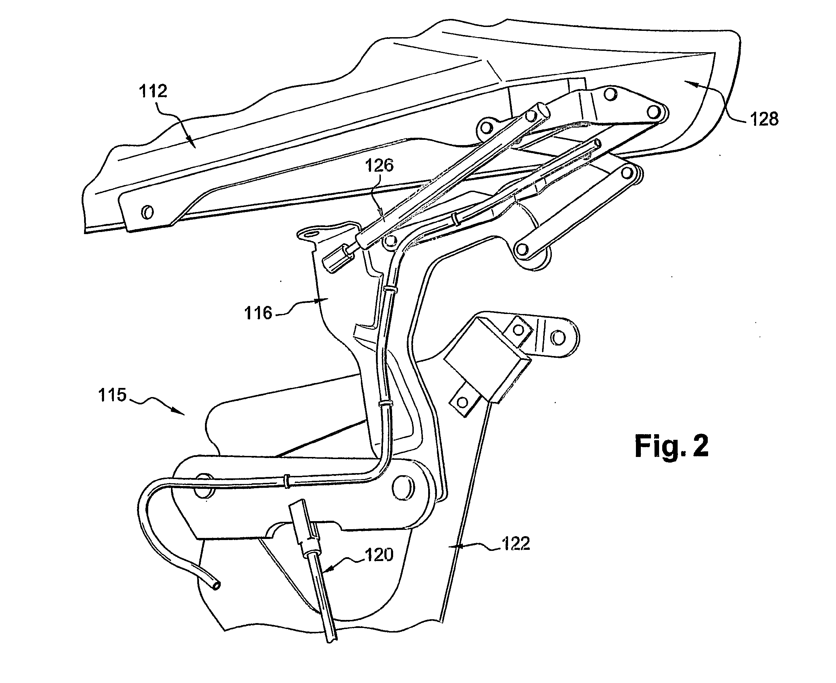

### Table des références en accord avec les figures 1 à 2

- 100: Caisse
- 110: Toit
- 112: Porte de coffre
- 114: Système articulé
- 115: Mécanisme latéral
- 116: Châssis intermédiaire
- 118: Charnière « col de cygne »
- 120: Première système pneumatique
- 122: Platine
- 124: Partie inférieure de la porte de coffre
- 126: Second système actuateur
- 128: Plaque de support

## Revendications

1. Procédé de montage d'un véhicule comportant un dispositif de toit (110) escamotable, ledit toit (110) étant apte à être déplacé d'une position fermée reposant sur le cadre du véhicule à une position escamotée dans le coffre du véhicule, sous la porte de coffre (112), ladite porte de coffre (112) étant apte à être déplacé par l'intermédiaire de deux mécanismes latéraux, **caractérisé en ce qu'**il comporte les étapes suivantes :
• on fixe les mécanismes latéraux formés par un châssis intermédiaire (116) immobilisé sur une platine (122) par solidarisation de la platine (122) sur la caisse (100) à l'intérieur du coffre,
• on met en place la porte de coffre (112) sur la caisse (100) et on la relie aux mécanismes latéraux,
• on amène le toit (110) qui est livré sur la chaîne de montage avec un ensemble de système d'actuateurs (120), de préférence un système hydraulique,
• on fixe le toit (110) sur la caisse (100),
• on fixe sur la platine (122) les éléments du système d'actuateurs (120) apte à mettre en mouvement les mécanismes latéraux.

2. Procédé de montage selon la revendication 1, **caractérisé en ce que** chaque mécanisme latéral (115) est amené replié et immobilisé sur la chaîne de montage.

3. Procédé de montage selon la revendication 2, **caractérisé en ce que** le mécanisme latéral (115) est livré sur la chaîne de montage avec une plaque de support (128) destinée à être solidarisée après montage à la porte de coffre (112).

4. Procédé de montage selon la revendication 3, **caractérisé en ce qu'**un second système actuateur (126), de préférence un second système pneumatique, couplé à un système de bielles articulé et destiné à être fixé à une de ses extrémités sur la plaque de support (128) solidaire de la porte de coffre (112) et à l'autre extrémité sur le châssis intermédiaire (116), est livré fixé à une de ses extrémités sur la plaque de support (128) et clipsé à l'autre extrémité également sur la plaque de support (128).

5. Procédé de montage selon la revendication 4, **caractérisé en ce que** le second système actuateur (126), de préférence le second système pneumatique, et le système de bielles articulé, destinés à être fixés par une de leurs extrémités à la porte de coffre (112), sont simultanément fixés à la porte de coffre (112) par l'intermédiaire de la fixation de la plaque de support (128).

6. Procédé de montage selon l'une des revendications précédentes, **caractérisé en ce que** le toit (110) est livré sur la chaîne de montage avec l'ensemble du système hydraulique, la tablette arrière du véhicule et des volets de fermeture associés, le mécanisme les pilotant.

7. Procédé de montage selon la revendication 6, **caractérisé en ce que** l'ensemble du système hydraulique livré avec le toit (110) est fixé sur la caisse (100) et sur les mécanismes latéraux, le boîtier de distribution étant de préférence fixé dans la zone du coffre et le second système pneumatique étant fixé à une première extrémité sur la platine (122), et à la deuxième extrémité sur le châssis intermédiaire (116)

8. Véhicule comprenant un dispositif de toit (110) et un dispositif de porte de coffre (112) montés selon un procédé suivant l'une des revendications précédentes, l'ensemble du système d'actuateurs (120) étant relié à une unité de contrôle du véhicule.

## Claims

1. Method of assembling a vehicle comprising a retractable roof device (110), the said roof (110) being able to be moved from a closed position resting on the frame of the vehicle into a retracted position inside the boot of the vehicle, under the boot lid (112), the said boot lid (112) being able to be moved via two lateral mechanisms, **characterized in that** it comprises the following steps:
• the lateral mechanisms which are formed by an intermediate chassis (116) immobilized on a mounting plate (122) are secured by securing the mounting plate (122) to the body (100) inside the boot,
• the boot lid (112) is fitted to the body (100) and connected to the lateral mechanisms,
• the roof (110), which arrives on the assembly line with an actuator system (120) assembly, preferably a hydraulic system, is brought into position,
• the roof (110) is fixed to the body (100),
• those elements of the actuator system (120) capable of setting the lateral mechanisms in motion are fixed to the mounting plate (122).

2. Method of assembly according to Claim 1, **characterized in that** each lateral mechanism (115) is brought to the assembly line in the folded and immobilized position.

3. Method of assembly according to Claim 2, **characterized in that** the lateral mechanism (115) is delivered to the assembly line with a support plate (128) intended to be secured to the boot lid (112) after fitting.

4. Method of assembly according to Claim 3, **characterized in that** a second actuator system (126), preferably a pneumatic second system, coupled to a system of articulated links and intended to be attached at one of its ends to the support plate (128) secured to the boot lid (112) and at the other end to the intermediate chassis (116) is delivered fixed at one of its ends to the support plate (128) and clipped at the other end also to the support plate (128).

5. Method of assembly according to Claim 4, **characterized in that** the second actuator system (126), preferably the pneumatic second system, and the articulated system of links, which are intended to be fixed by one of their ends to the boot lid (112) are at the same time fixed to the boot lid (112) via the fixing of the support plate (128).

6. Method of assembly according to one of the preceding claims, **characterized in that** the roof (110) is delivered to the assembly line with the entire hydraulic system, the vehicle rear parcel shelf and associated closing flaps and mechanisms controlling same.

7. Method of assembly according to Claim 6, **characterized in that** the entire hydraulic system delivered with the roof (110) is fixed to the body (100) and to the lateral mechanisms, the distribution unit preferably being fixed in the boot region and the pneumatic second system being fixed at a first end to the mounting plate (122) and at the second end to the intermediate chassis (116).

8. Vehicle comprising a roof device (110) and a boot lid device (112) which are fitted according to a method according to one of the preceding claims, the entire actuator system (120) being connected to a control unit of the vehicle.

## Patentansprüche

1. Verfahren zur Montage eines Fahrzeugs mit einer faltbaren Dachvorrichtung (110), wobei das Dach (110) aus einer auf dem Rahmen des Fahrzeugs aufliegenden geschlossenen Position in eine in den Kofferraum des Fahrzeugs versenkte Position unter dem Kofferraumdeckel (112) bewegt werden kann, wobei der Kofferraumdeckel (112) durch zwei Seitenmechanismen bewegt werden kann, **dadurch gekennzeichnet, dass** es die folgenden Schritte umfasst:
- Befestigen der durch ein an einer Grundplatte (122) festgelegtes Zwischenchassis (116) gebildeten Seitenmechanismen durch Anbringen der Grundplatte (122) am Aufbau (100) im Inneren des Kofferraums,
- Anordnen des Kofferraumdeckels (112) an dem Aufbau (100) und ihr Verbinden mit den Seitenmechanismen,
- Zuführen des auf dem Montageband mit einer Anordnung eines Stellgliedsystems (120), vorzugsweise eines hydraulischen Systems, gelieferten Dachs (110),
- Befestigen des Dachs (110) an dem Aufbau (100),
- Befestigen der Elemente des Stellgliedsystems (120), die die Seitenmechanismen in Bewegung versetzen können, an der Grundplatte (122).

2. Montageverfahren nach Anspruch 1, **dadurch gekennzeichnet, dass** jeder Seitenmechanismus (115) zusammengeklappt und festgelegt auf dem Montageband zugeführt wird.

3. Montageverfahren nach Anspruch 2, **dadurch gekennzeichnet, dass** der Seitenmechanismus (115) mit einer Trägerplatte (128) auf dem Montageband geliefert wird, die nach der Montage an dem Kofferraumdeckel (112) fest angebracht werden soll.

4. Montageverfahren nach Anspruch 3, **dadurch gekennzeichnet, dass** ein zweites Stellgliedsystem (126), vorzugsweise ein zweites, pneumatisches System, das mit einem angelenkten Verbindungsstangensystem verbunden ist, welches mit einem seiner Enden an der fest an dem Kofferraumdeckel (112) angebrachten Trägerplatte (128) und mit dem anderen Ende an dem Zwischenchassis (116) befestigt werden soll, mit einem seiner Enden an der Trägerplatte (128) befestigt und mit dem anderen Ende ebenfalls an der Trägerplatte (128) festgeklemmt geliefert wird.

5. Montageverfahren nach Anspruch 4, **dadurch gekennzeichnet, dass** das zweite Stellgliedsystem (126), vorzugsweise das zweite, pneumatische System, und das angelenkte Verbindungsstangensystem, die mit einem ihren Enden an dem Kofferraumdeckel (112) befestigt werden sollen, durch die Befestigung der Trägerplatte (128) gleichzeitig an dem Kofferraumdeckel (112) befestigt werden.

6. Montageverfahren nach einem der vorhergehenden Ansprüche, **dadurch gekennzeichnet, dass** das Dach (110) auf dem Montageband mit der Anordnung des hydraulischen Systems, der Heckablage des Fahrzeugs und den zugehörigen Verschlussklappen, wobei sie von dem Mechanismus bedient werden, geliefert wird.

7. Montageverfahren nach Anspruch 6, **dadurch gekennzeichnet, dass** die Anordnung des mit dem Dach (110) gelieferten hydraulischen Systems an dem Aufbau (100) und an den Seitenmechanismen befestigt wird, wobei der Verteilerkasten vorzugsweise in dem Bereich des Kofferraums befestigt wird und das zweite, pneumatische System mit einem ersten Ende an der Grundplatte (122) und mit dem zweiten Ende an dem Zwischenchassis (116) befestigt wird.

8. Fahrzeug mit einer Dachvorrichtung (110) und einer Kofferraumdeckelvorrichtung (112), die gemäß einem der vorhergehenden Ansprüche montiert sind, wobei die Anordnung des Stellgliedsystems (120) mit einer Steuereinheit des Fahrzeugs verbunden ist.
